# EUROPEAN PATENT APPLICATION

(11) **EP 1 901 545 A1**
(43) Date of publication of application: **19.03.2008**
(21) Application number: 06767702.1
(22) Date of filing: 30.06.2006
(51) Int. Cl.: H04N 5/00, H04Q 9/00

(54) **COMMUNICATION TERMINAL**

(30) Priority: 01.07.2005 JP 2005193688
(71) Applicant: MATSUSHITA ELECTRIC INDUSTRIAL CO., LTD., Osaka 571-8501 (JP)
(72) Inventor: NISHIMURA, Masanori c/o Panasonic Mobile Comm., Kanagawa 224-8539 (JP)
(74) Representative: Grünecker, Kinkeldey, Stockmair & Schwanhäusser Anwaltssozietät
(86) International application number: PCT/JP2006/313094
(87) International publication number: WO 2007/004560

(57) **Abstract**

A communication terminal wherein when a video is outputted from the communication terminal, a device, to which the video is outputted, can be operated in a simple manner from the communication terminal side. A communication terminal (100) comprises a cable connection/disconnection detecting part (101) that detects a connection or disconnection of a video output cable (150); a video signal output part (102) that converts moving images and still images in the communication terminal to video signals and outputs the video signals to the exterior; an infrared ray emitting part (103) that outputs a remote control signal; a liquid crystal display part (104) that displays GUIs; a control part (105) that controls the whole apparatus and the components of the apparatus; and a key entering part (106) for performing the operation of the communication terminal and that of the remote control function. When a video is outputted from the communication terminal (100) to a television receiver (200), the infrared ray emitting part (103) in the communication terminal is automatically activated upon a connection of the video output cable (150) to the communication terminal, whereby the power supply control, video input switching and sound level adjustment of the television receiver (200) can be performed by operating the communication terminal (100).

## Description

### Technical Field

The present invention relates to a communication terminal having remote control functions for televisions and video output functions.

### Background Art

Conventionally, there are cellular telephones with remote control functions, as devices provided with a function of a remote control for televisions and a function of a communication terminal (for example, see Patent Document 1).

In the cellular telephone remote control system disclosed in Patent Document 1, by pressing a set number on numeric buttons of the telephone, the remote control function for a household electrical appliance comprising a control target device, desired by an operator, stored in the remote control storage IC can be carried out, so that it is possible to use the remote control functions for a plurality of kinds of household electrical appliances using one telephone alone.

The above cellular telephone remote control system refers to switching the communication terminal function and the remote control function by pressing a function mode switching use switch, and the remote control function cannot be automatically activated.

Meanwhile, when cellular telephone terminals having the video output function that has recently become commercially practical, video-outputs moving images or static images to a television to display, a remote control apparatus dedicated to the television is used to perform operations on the television side such as power supply, ON/OFF, volume adjustment, channel selection and image quality adjustment.
Patent Document 1: Japanese Patent Application Laid-Open No.2003-78977

### Disclosure of Invention

### Problems to be Solved by the Invention

Such a conventional cellular telephone remote control system provides a configuration where the remote control function is simply added to the cellular telephone, and so when alternately performing the operation of the terminal and the operation of a remote control target device such as a television, there is a problem that it is necessary to switch between the terminal function and remote control function by pressing a switching use switch, resulting in a problem of inconvenience.

The present invention is provided in view of the above problem, and it is an obj ect of the present invention to provide a communication terminal which enables easy operations of a video-output target device upon video-output by the communication terminal.

### Means for Solving the Problem

The communication terminal according to the present invention adopts a configuration including: a remote control section that transmits a control signal for controlling a control target device; a video outputting section that outputs a video signal; a detecting section that detects whether a video output cable for connecting the video outputting section and the control target device is connected or disconnected; and a control section that starts the remote control section when the detecting section detects connection of the video output cable.

The present invention is a program for executing on a computer the steps of: detecting whether a video output cable for connecting a video outputting section that outputs a video signal and a control target device is connected or disconnected; and starting a remote control section that, when connection of the video output cable is detected, transmits a control signal for controlling the control target device.

### Advantageous Effect of the Invention

The present invention can automatically use the remote control function by connecting and disconnecting a video output cable, and easily operate a communication terminal and television at the same time without, for example, pressing a switching use switch by the user.

### Brief Description of Drawings

FIG.1 is a block diagram illustrating a configuration of a communication terminal according to one embodiment of the present invention;
FIG.2 shows an appearance of the communication terminal according to the above embodiment; and
FIG.3 shows appearances of the communication terminal according to the above embodiment and a television receiver.

### Best Mode for Carrying Out the Invention

An embodiment of the present invention will be described in detail below with reference to the accompanying drawings.

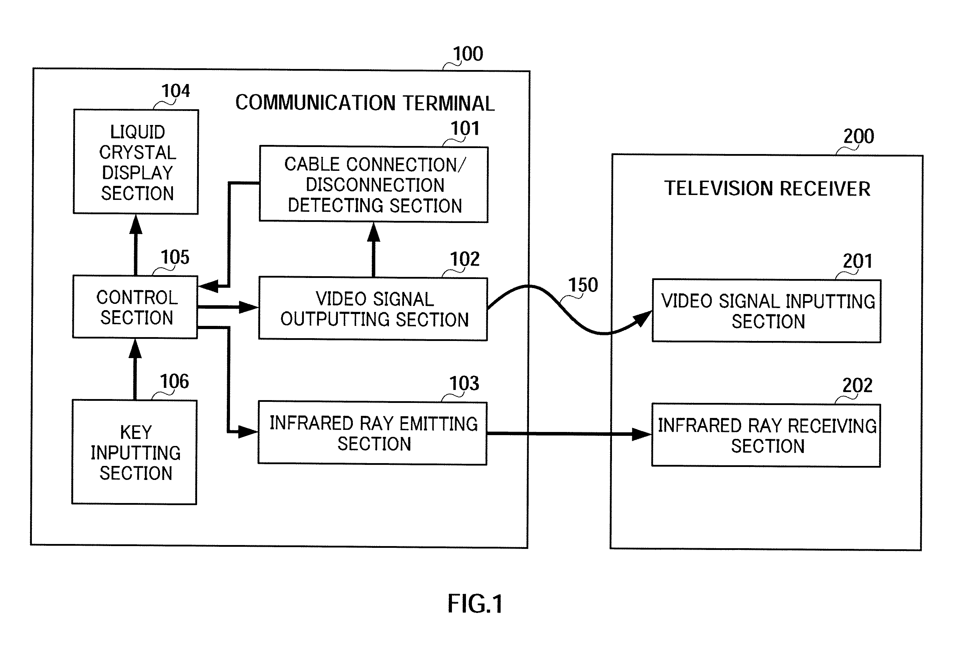

FIG.1 is a block diagram showing a configuration of a communication terminal according to one embodiment of the present invention.

In FIG.1, communication terminal 100 having remote control functions and video output functions has cable connection/disconnection detecting section 101 which detects whether a video output cable is connected or disconnected, video signal outputting section 102 which converts moving images or static images inside the communication terminal to video signals and outputting the signals outside, infrared ray emitting section 103 which outputs control signals supporting remote control functions of various kinds of product manufacturers, liquid crystal display section 104 which displays a GUI (Graphical User Interface), control section 105 which controls the entire apparatus and each section, and key inputting section 106 for operating the communication terminal and the remote control function.

Television receiver 200 has video signal inputting section 201 and infrared ray receiving section 202.

Infrared ray emitting section 103 and infrared ray receiving section 202 are I/O ports for performing optical communication according to standards for data transmission using infrared rays such as IrDA (Infrared Data Association) and ASK. In addition, instead of infrared rays, an aspect may be possible where wireless communication is performed using radio signals.

Control section 105 is formed with a microcomputer, and controls starting and stopping of video signal outputting section 102 based on connection or disconnection of video output cable 150 detected by cable connection/disconnection detecting section 101. Control section 105 further includes the GUI displaying OSD (On Screen Display) function for generating a GUI for operation information of a control target device or related information of video signal output, and displays the operation information of the control target device and the related information of video signal output such as a volume on the screen of liquid crystal display section 104.

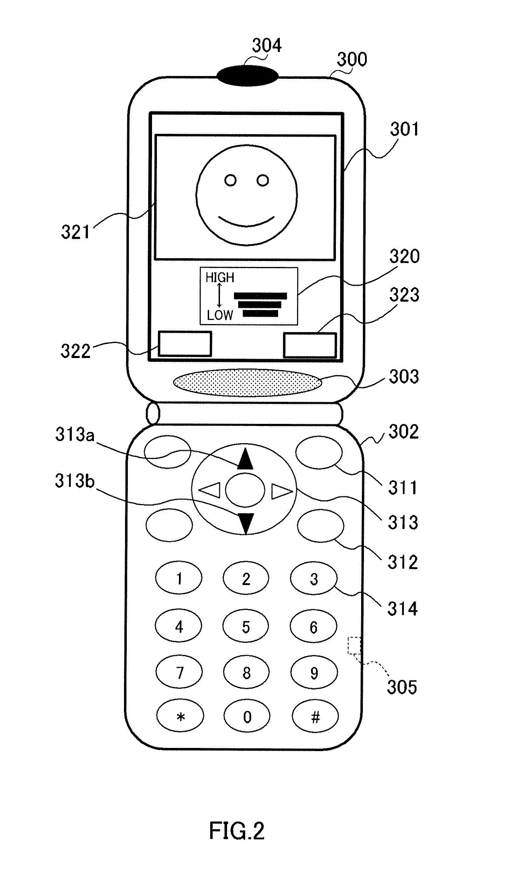

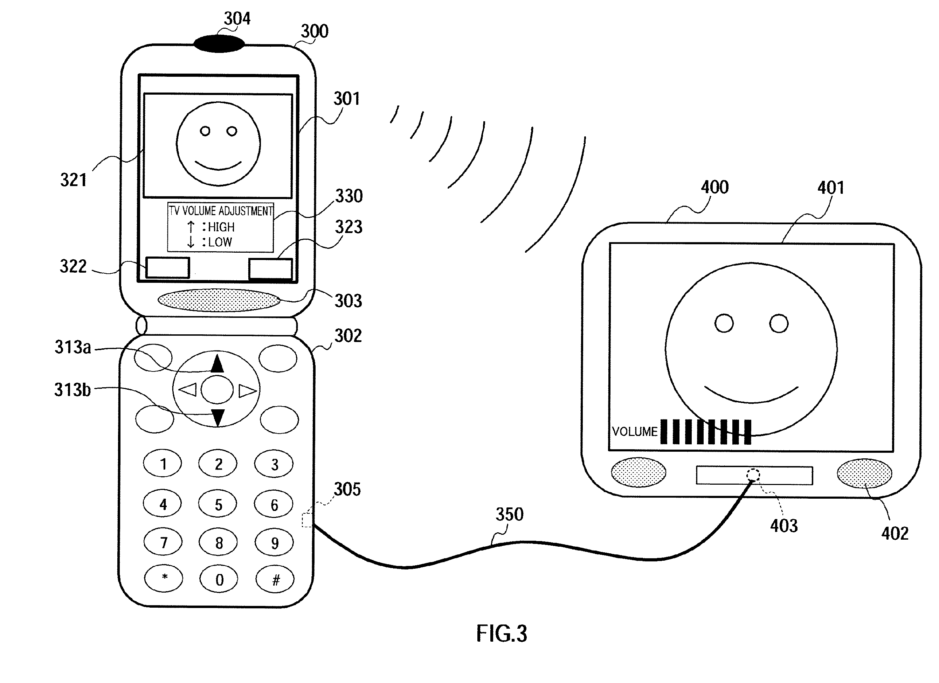

FIG.2 shows an appearance of above communication terminal 100. FIG.3 shows appearances of above communication terminal 100 and television receiver 200. These drawings show an example of applying a cellular telephone/PHS (Personal Handy-Phone System) as the communication terminal of this embodiment and a television receiver as a video-output target device.

In FIGs.2 and 3, cellular telephone (communication terminal) 300 has LCD display section 301, key inputting section 302, built-in speaker 303 for terminal for receiving a call, infrared ray emitting section 304, and video signal output terminal 305.

LCD display section 301 is formed with an LCD display having a dot-matrix configuration, PDP as backlight, EL and various drivers. LCD display section 301 displays various menus for telephone functions, and icons showing operation states of the telephone functions. In the remote control function mode and video output function mode, LCD display section 301 displays various operation information and volume adjusting GUI.

Key inputting section 302 includes telephone function key 311 for receiving a call, sending a call, switching between telephone functions and determining the operation, mode key 312 for switching various functions, cursor key 313 for moving a selection target up, down, left and/or right, and dial keys 314 for dialing telephone numbers. Cursor key 313 includes up key 313a and down key 313b.

In FIG.3, television receiver 400 has display section 401, built-in speaker 402 for television and video signal input terminal 403. Video signal output terminal 305 of cellular telephone 300 and video signal input terminal 403 of television receiver 400 are connected using video output cable 350, and cellular telephone 300 outputs a video signal to television receiver 400 upon video-output. Television receiver 400 has a control microcomputer, and displays information of channels, time and volume on a television screen by OSD generation function section (not shown). Generally, an imaging apparatus such as a television and electronic devices for the video conference system display information of a channel, time and volume on a television screen. The data of OSD is not an image and is stored in the format called "bit map." This bit map is converted into pixel values in YUV format represented by Y, Cb and Cr, and the converted pixels are overlaid upon a source image of television broadcast.

The operation of communication terminal 100 configured as described above will be described below.

In FIG. 1, when key inputting section 106 receives an input for playing back moving images or static images, control section 105 displays the image stored inside communication terminal 100, on liquid crystal display section 104. At this point, liquid crystal display section 104 displays the image together with the GUI showing operation methods of, for example, playing back, stopping, and forwarding the image. A specific example of displaying the GUI will be described later with reference to FIGs.2 and 3.

Next, the operation upon connection of video output cable 105 will be described.

When video output cable 150 is connected to video signal outputting section 102, cable connection/disconnection detecting 101 detects and reports that video output cable 150 is connected, to control section 105. Upon receiving the report of cable connection from cable connection/disconnection detecting section 101, control section 105 outputs a video output image from video signal outputting section 102 to video signal inputting section 201 of television receiver 200 through video output cable 150.

Further, by receiving the report of cable connection from cable connection/disconnection detecting section 101, control section 105 starts infrared ray emitting section 103, and displays the GUI showing the operation method of a television remote control on liquid crystal display section 104. At this point, control section 105 displays both the GUI showing the operation methods of the terminal such as playing back, stopping and forwarding the image, and the GUI showing the operation method of the television remote control. The user can operate both communication terminal 100 and remote control functions by operating key inputting section 106 according to the GUI.

Next, the operation upon disconnection of video output cable 150 will be described.

When video output cable 150 is disconnected from video signal outputting section 102, cable connection/disconnection detecting section 101 detects and reports that video output cable 150 is disconnected, to control section 105. Upon receiving the report of cable disconnection from cable connection/disconnection detecting section 101, control section 105 suspends image transfer to video signal outputting section 102 and stops video signal output.

Further, by receiving the report of cable disconnection from cable connection/disconnection detecting section 101, control section 105 deletes the GUI showing the operation method of the television remote control displayed on liquid crystal display section 104, and stops the operation of infrared ray emitting section 103. Consequently, the user can operate communication terminal 100 alone by operating key inputting section 106 according to the GUI.

Next, an operation will be described when video output cable 150 is connected in advance and key inputting section 106 receives an input for playing back moving images or static images.

After the cable connection is reported from cable connection/disconnection detecting section 101, control section 105 outputs the image to video signal inputting section 201 of television receiver 200 through video signal outputting section 102, starts infrared ray emitting section 103 and displays the GUI showing the operation method of the television remote control on liquid crystal display section 104. At this time, the operations of receiving the GUI display and key input are the same as for the operation as described above. Subsequently, when video output cable 150 is connected and the video signal output is stopped, control section 105 stops the operation of infrared ray emitting section 103.

Specific examples of the GUI will be described with reference to FIGs.2 and 3.

FIG.2 shows an example of the volume adjusting GUI when video output is not carried out. When the mode switches to the video output function mode by, for example, operating mode key 312, cellular telephone 300 switches from the normal telephone communication function and displays volume adjusting GUI 320 for terminal shown in FIG.2.

As shown in FIG.2, LCD display section 301 of cellular telephone 300 displays video output image 321, volume adjusting GUI 320 for terminal, showing the volume operation method and software keys 322 and 323 for commanding a stop and execution of video output.

The user can adjust the volume outputted from built-in speaker 303 for terminal by pressing up key 313a or down key 313b of cursor key 313 of key inputting section 302 according to volume adjusting GUI 320 for terminal, showing the volume operation method displayed on LCD display section 301.

FIG.3 shows an example of a case where cellular telephone 300 and television receiver 400 are connected using video output cable 350. As described above, when video output cable 350 is connected to video signal output terminal 305 of cellular telephone 300, a video output image is outputted to television receiver 400 through video output cable 350.

When video-output is carried out, GUI 330 for adjusting the volume is displayed on LCD display section 301 of cellular telephone 300. Upon starting video-output, this volume adjusting GUI 330 for television is automatically switched from volume adjusting GUI 320 for terminal shown in FIG.2 and is displayed. The example of the volume adjusting GUI in FIG.3 shows that the volume outputted from built-in speaker 303 for terminal can be adjusted by up key 313a for increasing the volume and down key 313b for decreasing the volume. Here, volume adjusting GUI 320 for television shown in FIG.2 and volume adjusting GUI 330 for terminal shown in FIG.3 use the same key operations of increasing the volume using up key 313a and decreasing the volume using down key 313b, and so the user can adjust the volume according to circumstances using the same key operations without depending on whether or not the adjustment is carried out in the middle of video-output. The user's key operation using up key 313a or down key 313b is converted into a remote control signal, and this signal is transmitted from infrared ray emitting section 304 to an infrared ray receiving section (not shown) of television receiver 400 to adjust the volume of television receiver 400.

As described above, according to this embodiment, when, upon video-output from communication terminal 100 to television receiver 200, video output cable 150 is connected to the communication terminal, infrared ray emitting section 103 is automatically started inside the communication terminal, power supply control of television receiver 200, video-input switching and volume adjustment are enabled by operating communication terminal 100, so that the user can easily operate the communication terminal and the television at the same time without, for example, pressing a switching use switch.

The above descriptions only illustrate a preferred embodiment of the present invention, but the scope of the invention is not limited to this. For example, although a case has been described as an example where the cellular telephone is applied as the communication terminal and the television receiver is applied as the control target device, a communication terminal is not limited to the cellular telephone, and is applicable to portable information terminals such as PDA (Personal Digital Assistants) with the information communication function, personal computers, and computer-integrated apparatuses. Further, in addition to the above television receiver, the control target device may be applied to CS, 110 degree digital broadcast receiving apparatuses, further, electronic apparatuses other than the television receivers, for example, personal computers enabling built-in/ connection of a digital broadcast tuner, and digital broadcast receiving apparatuses of cellular telephones. Furthermore, this communication apparatus may transmit data received and stored in, for example, a video record and play back apparatus (control target apparatus) other than the television receiver.

Further, the examples of displaying the GUI in FIGs.2 and 3 are one example, and any display formats may be possible.

Furthermore, although the communication terminal is used in this embodiment for ease of explanation, the communication terminal may be read as a cellular telephone, cellular telephone remote control apparatus and video output apparatus.

Still furthermore, the type, number and connection method of circuit sections such as the video signal outputting section forming the above communication terminal are not limited to the above embodiment.

Moreover, the communication terminal described above is also realized by a program for functioning the communication terminal. This program is stored in a computer-readable storage medium.

The present application is based on Japanese Patent Application No.2005-193688, filed on July 1,2005, entire content of which is expressly incorporated by reference herein.

### Industrial Applicability

The communication terminal according to the present invention is useful as a communication terminal having remote control functions for various types of household electrical appliances and the video output function.

## Claims

1. A communication terminal comprising:
a remote control section that transmits a control signal for controlling a control target device;
a video outputting section that outputs a video signal;
a detecting section that detects whether a video output cable for connecting the video outputting section and the control target device is connected or disconnected; and
a control section that starts the remote control section when the detecting section detects connection of the video output cable.

2. The communication terminal according to claim 1, wherein the control section stops the remote control section when the detecting section detects disconnection of the video output cable.

3. The communication terminal according to claim 1, further comprising a video output detecting section that detects a video signal output from the video outputting section,
wherein, when the video output cable is inserted and the video signal output is started, the control section starts the remote control section.

4. The communication terminal according to claim 1, further comprising a video output detecting section that detects a video signal output from the video outputting section,
wherein, when the video output cable is connected and the video signal output is stopped, the control section stops the remote control section.

5. The communication terminal according to claim 1, further comprising:
a graphical user interface generating section that generates a graphical user interface for operation information of the control target device or related information of the video signal output,
wherein, according to whether the remote control section starts or stops, the control section generates both the graphical user interface for the operation information of the control target device and the graphical user interface for the related information of the video signal output, or generates the graphical user interface for the related information of the video signal output alone.

6. The communication terminal according to claim 1, wherein the control section controls power on and off of the control target device, video-input switching or volume adjustment, according to whether the remote control section starts or stops.

7. A program for executing on a computer the steps of:
detecting whether a video output cable for connecting a video outputting section that outputs a video signal and a control target device is connected or disconnected; and
starting a remote control section that, when connection of the video output cable is detected, transmits a control signal for controlling the control target device.
